# EUROPEAN PATENT SPECIFICATION

(11) **EP 1 980 887 B1**
(45) Date of publication and mention of the grant of the patent: **25.08.2010**
(21) Application number: 08007134.3
(22) Date of filing: 10.04.2008
(51) Int. Cl.: G02B 6/44

(54) **Method for accessing one or more optical fibers of a telecommunication cable**
Verfahren zum Zugriff auf eine oder mehrere Glasfasern eines Telekommunikationskabels
Procédé d'accès à une ou plusieurs fibres optiques d'un câble de télécommunication

(30) Priority: 11.04.2007 FR 0702624
(43) Date of publication of application: 15.10.2008
(73) Proprietor: Draka Comteq B.V., 1083 HJ Amsterdam (NL)
(72) Inventor: Tatat, Olivier, 62231 Sangatte (FR); Bonicel, Jean-Pierre, 92500 Rueil Malmaison (FR); Lavenne, Alain, 62100 Calais (FR)
(74) Representative: op den Brouw-Sprakel, Vera Stefanie Irene

(56) References cited:
- EP-A- 0 822 427
- EP-A- 1 052 533
- US-A1- 2002 126 968

## Description

The present invention relates to the field of optical fiber telecommunication cables and more particularly of so-called micromodule cables in which optical fibers are grouped to form a plurality of micromodules gathered together as a cable.

Optical fiber cables including several optical fiber micromodules are known, notably from documents FR-A-2 665 266 and FR-A-2 706 218, each optical fiber micromodule being enveloped by a retaining jacket enclosing several optical fibers.

As known per se, a micromodule telecommunication cable comprises a plurality of optical fibers grouped in micromodules within a cavity which forms the central core of the cable. This central cavity is surrounded by a jacket. A micromodule may contain about 2 to 24 optical fibers enveloped together in a flexible and thin retaining jacket. The retaining jackets of the micromodules and the jackets of optical fibers may be colored in order to facilitate localization of the optical fibers in the cable, for example during a connection operation.

With the development of telecommunications systems with optical fibers up to the subscribers, known under the acronym of FTTH for "Fiber To The Home" or FTTC for "Fiber To The Curb", it is sought to make large capacity cables containing a large number of optical fibers grouped in micromodules. Such cables should allow an individual access to each micromodule for distribution in a given building. For this purpose, the field technicians make a by-pass in the telecommunication cable. For this by-pass at least one aperture or insertion window is made in the outer jacket of the cable in order to provide access to the interior of the cable. Consequently, one or more optical fibers, e.g. present in one or more micromodules, are cut and drawn from the cable through this or another insertion window in order to make a connection to a given optical system in a given building.

The document EP-A-1 052 533 describes a method for accessing one or more optical fibers in a cable for by-passing optical fibers towards an optical system. Two cut-outs are made in the jacket of the cable in order to create a first insertion window through which a optical fiber is cut and a second insertion window through which the cut optical fiber is drawn in order to be by-passed.

The document US-A-6 134 363 describes a method for accessing one or more optical fibers freely positioned in a cable. The cable jacket is stripped on either side of peripheral strength members over a given length so as to create a window for accessing the optical fibers.

The document US-A-5 140 751 describes a tool for accessing one or more optical fibers positioned in a tube framed by strength members. The tool has suitable grooves for receiving the tube and the strength members respectively. A blade then cuts the tube over a given length in order to create an insertion window for accessing the optical fibers.

The methods and tools described in the aforementioned documents do not provide any particular step for protecting the optical fibers or micromodules during the cutting out of the by-pass insertion windows. Now, in particular when the filling rate of the central core is significant, the cutting tool may penetrate into the central core and damage optical fibers contained therein.

The document US-A-5 093 992 proposes a tool in which the tube containing one or more optical fibers is bent. A blade cuts the tube along a tangent to the curvature of the tube so as to prevent optical fibers from being touched by the blade.

This tool, however, is complex and unsuitable for a large capacity cable containing several micromodules and having a significant filling rate

The document US-A-2002/0126968 describes a cutting tool and optical cable having an outer sheath, a central cavity and optical wave guides which are surrounded by a tape. The cutting tool cuts through the outer sheath and penetrates into the central cavity.

The document EP-A-0 822 427 describes a tool for opening the protection tube of an optical fiber cable, the tool comprising a body, guide, cutting edge and a pulley for bending the optical fiber, said pulley having a groove in which the optical fiber is positioned.

Accordingly, there is a need for a method for accessing one or more optical fibers contained in a telecommunication cable which method avoids any risk of damaging the optical fibers and which method is simple to operate whatever the size of the cable.

For this purpose, the invention proposes a method wherein the optical fibers contained in the central core of the cable are pushed away prior to or during cutting out an access window in the jacket of the cable.

The invention more particularly proposes a method for accessing one or more optical fibers of a telecommunication cable, the cable comprising a plurality of optical fibers freely positioned in a central core, which central core is surrounded by a jacket, the method comprising the steps of:
- defining at least one cut-out area on the outer periphery of the jacket of the cable in which at least one out-out area an access window is to be cut out;
- pushing away (at least some of) the optical fibers with a pushing tool to a section of the central core opposite to the at least one cut-out area by exerting a force on said (at least some of the) optical fibers said force having at least one radial component with respect to the cable;
- performing a cut-out in the jacket of the cable in said at least one cut-out area while maintaining said force on the optical fibers in order to form said access window.

The optical fibers or micromodules or at least some of the the optical fibers or micromodules comprising optical fibers are pushed away - pushed back - from that part of the jacket on which the cut-out area is defined. The optical fibers or micromodules are pushed towards i.e. relocated to - a section of the central core that is opposite the cut-out area, that is to say the optical fibers or micromodules are pushed to a lower section of the central core in the case the cut-out area is defined on the jacket surrounding the upper area of the central core, it is important that at least the optical fibers that are liable to damaging if not being pushed away are pushed away before performing the cut-out. Any optical fibers that are not liable to damaging may but are not required to be pushed away before performing the cut-out.

According to an embodiment, the optical fibers are pushed away from the jacket of the cable by a force exerted through the jacket of the cable. Thus the force exerted on the optical fibers is effected by exerting a force on the outer periphery of the jacket. This is possible if the jacket is made of a flexible material that can be deformed by the force. Due to this deformation the optical fibers are pushed away.

According to another embodiment, the optical fibers are pushed away from the jacket of the cable by a force exerted through an insertion window made in the jacket of the cable. Thus at least one insertion window is made in the jacket in the cut-out area, and following said force exerted on the optical fibers is exerted through said at least one insertion window. This embodiment can for example be used for cables having non-flexible jackets which are not able to be deformed. In such a case the optical fibers cannot be pushed away by exerting a force on the outer periphery of the jacket. Therefore, the force needs to be exerted directly on the optical fibers - or micromodules - and in order to effect this an opening (insertion window) is used.

According to an embodiment, the insertion window made is the jacket has the necessary and sufficient dimensions for receiving a pushing tool suitable for exerting said force on the optical fibers of the cable. Thus said at least one insertion window is suitable for receiving said pushing tool. For example an insertion window having a surface area between 4 and 90 mm² can be made.

According to the invention, the optical fibers are pushed away from the jacket of the cable by a force exerted in at least two distant points of the cable, the cutting-cut being performed between said two points. Thus said force is exerted on at least two longitudinally distant points on the jacket, located on said cut-out area. The cut-out area has two longitudinal ends. The distant points are preferably located near or on these two longitudinal ends of the cut-out area. In this way an optimal relocation of the optical fibers is obtained and a large access window can be cut in one single cutting operation.

According to an embodiment the central core is surrounded by a protective envelope which is located on the inside of the jacket, between which protective envelope and the jacket optionally a metal sheath is present.

According to another embodiment, the steps of pushing away the optical fibers from the jacket of the cable and of performing a cut-out in the jacket of the cable are carried out simultaneously by a pushing and cutting tool suitable for piercing the jacket and optionally the metal sheath and for deforming a protective envelope of the central core in order to exert a force on the optical fibers.

According to an embodiment, the tool is a pushing and cutting mechanical milling cutter with a conical or rectangular profile, calibrated so as to penetrate into the cable beyond the jacket, preferably by substantially mm, without penetrating or even damaging the protective envelope.

According to an embodiment, the force exerted on the optical fibers is purely radial.

According to an embodiment, the cut-out is an access window for one or more optical fibers.

According to an embodiment, the plurality of optical fibers are grouped in at least one micromodule.

According to an embodiment, the plurality of optical fibers occupy the central core with a filling rate between 20% and 90%. The filling rate is the ratio of (I) the sum of the cross-sectional area of the micromodules, if any, and the cross-sectional area of any optical fibers not grouped in micromodules and (II) the cross-sectional area of the central cable core.

Other features and advantages of the invention will become apparent upon reading the following description of embodiments of the invention, given as an example and with reference to the appended figures which show,
- Fig. 1a, a cross-sectional diagram of a cable with micromodules;
- Fig. 1b, a crossr-sectional diagram of a cable with micromodules being pushed away;
- Fig. 2, a perspective diagram of a cable and of a pushing tool for applying the method for accessing one or more optical fibers according to a first embodiment of the invention;
- Fig. 3, a cross-sectional diagram of the cable and of the pushing tool of Fig. 2 ;
- Fig. 4, a perspective diagram of a cable and of a pushing tool for applying the method for accessing one or more optical fibers according to a second embodiment of the invention;
- Fig. 5, a longitudinal sectional diagram of the cable and of the pushing tool of Fig. 4;
- Fig. 6, a perspective diagram of a cable prepared for applying the method for accessing one or more optical fibers according to the invention;
- Fig. 7, a longitudinal sectional diagram of the cable of Fig. 6 and of a pushing tool for applying the method for accessing one or more optical fibers according a third embodiment of the invention;
- Fig. 8, a longitudinal sectional diagram of a cable and of a pushing tool for applying the method for accessing one or more optical fibers according to a fourth embodiment of the invention;
- Fig. 9, a partial cross-sectional diagram of a cable and of a pushing and cutting tool for applying the method for accessing one or more optical fibers according to a fifth embodiment of the invention;
- Figs. 10 and 11, as seen from the cable of Fig. 9, installed and in a secured position for the cutting-out, respectively,
- Fig. 12, a perspective diagram of the opening made by the pushing and cutting tool of Fig, 9.

The invention is described hereafter with reference to illustrative and non-limiting examples. The illustrated examples are given with reference to a cable with micromodules containing optical fibers. It is however understood that the method according to the present invention may also be applied with any other type of cable - such as for example a cable containing freely positioned optical fibers - for which cable an access window is to be cut out without cutting through the optical fibers contained in the cable. The present invention is only applicable on cables having a filling rate which is less than 100% in order to allow for sufficient room in the central core of the cable for pushing away the optical fibers before cutting out the access window.

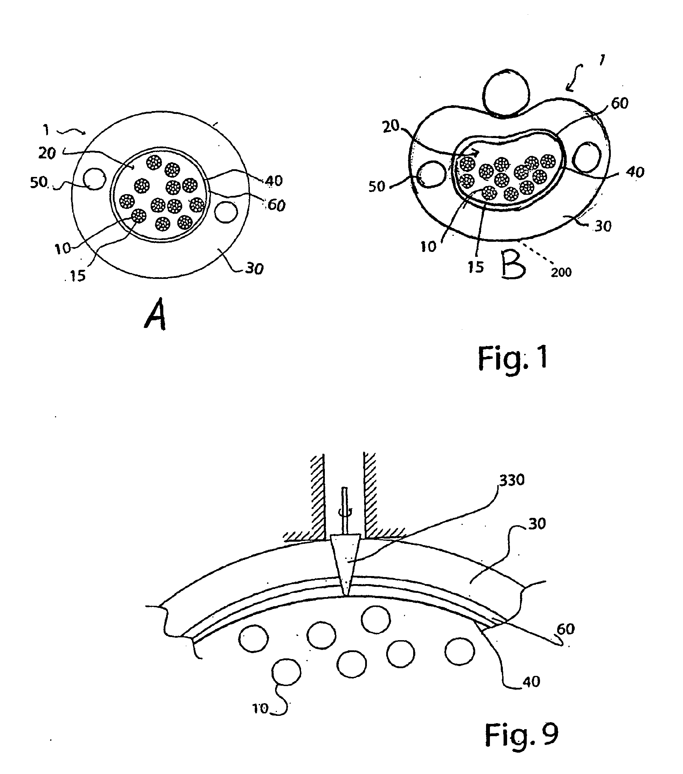

Figs. 1a and 1b illustrate a telecommunication cable 1. Cable 1 has a longitudinal central core 20 housing several micromodules 10 substantially parallel to each other in longitudinal direction. The part of the central core 20 that is not occupied by the micromodules 10 may be empty or may be filed with a filler material, and is preferably empty. Each micromodule 10 groups together several optical fibers 15 which are substantially parallel to each other in a longitudinal direction. A jacket 30 surrounds this central core 20. The jacket 30 may be made of polymer, for example of high density polyethylene (HDPE), and it provides a good seal to moisture and has mechanical flexibility. The jacket 30 is extruded around the central core 20 in which the micromodules 10 extend. When the cable 1 is considered in a cross-sectional view, the jacket 30 has an inner periphery and an outer periphery as defined radially. The jacket 30 may contain one or more longitudinally positioned strength members 50. The jacket 30 may actually consists of moisture-proof material but may not be very mechanically robust and in addition, may be sensitive to changes in temperature. The one or more strength members 50 are thus used for limiting the deformations of the cable 1 due to tensile forces, for example when laying the cable 1 in a duct, and for limiting axial deformations of the cable 1 in compression and expansion when the letter is subject to significant changes in temperature, by compensating the compression or expansion forces induced by the jacket 30. These strength members 50 may be plastic rods reinforced with glass, known as Glass Reinforced Plastio (GRP), or stranded or single-strand galvanized steel rods or aramide-reinforced plastic rods or any other longitudinal strength member suitable for stiffening a telecommunication cable. Figures 1a and 1b show an embodiment wherein two strength members 50 are present in the jacket 30 on either side of the central core 20,

Figs. 1 a and 1b also show a protective envelope 40 surrounding the central core 20 which protective envelope 40 forms a protective contact interface between the micromodules 10 and the jacket 30. This protective envelope 40 may consist of a plastic tape, polyester for example. This protective envelope 40 allows the micromodules 10 to be protected, notably from a metal sheath 60 which may be present between the protective envelope 40 and the jacket 30 when the cable 1 is intended for outdoor installations, and the protective envelope 40 may consist of a material absorbing moisture. The protective envelope 40 is preferably made of an elastic material that can be easily deformed.

In order to make a by-pass in such a telecommunication cable 1, an opening needs to be made in the jacket 30 of the cable 1. Such an opening is often designated as an access window. Such an access window is made through the entire thickness of the jacket 30 in order to gain access to the central core 20. Such an access window for example has a length of 140 mm and covers about 1/3 of the periphery of the cable 1. Next, one or more micromodules 10 need to be cut, which cut micromodules 10 are then drawn out of the cable 1 towards a junction box of an optical system.

When an access window is cut-out and opened in the cable 1, sharp tools, for example blades, cutters, cable strippers equipped with blades etc, are used, often manually, and the micromodules 10 and optical fibers 15 may be damaged during the process of cutting out an access window. Indeed, even when the filling rate of the central core 20 of the cable 1 is less than 100%, for example between 20% and 90%, the optical fibers 15 or micromodules 10 frequently occupy the complete empty, hollow space inside the central core 20 of the cable 1 because they are freely introduced into the central core 20 with an overlength in order to limit attenuation and to provide the cable 1 with the required performances. As a result, the risk of damaging a micromodule 10 or an optical fiber 15 upon opening an access window is not insignificant. Further, for cables 1 intended for outdoor applications, a metal sheath 60 may be placed between the jacket 30 and the protective envelope 40, in order to form a protection against corrosion and against rodents. This metal sheath 60 may consist of notched stainless steel tape and hence the cutting-cut of this metal sheath 60 requires a large penetration force which increases the risk of penetration into the central core 20 with possible damaging of the micromodules 10 or the optical fibers 15. If a metal sheath 60 is present, the access window is made throughout the thickness of both the jacket 30 and the metal sheath 60. If a protective envelope 40 is present it is either possible to make the access window also through the protective envelope. Otherwise, it is possible to keep intact the protective envelope 40 when making an access window. In this case the protective envelope 40 needs to be opened (e.g. by cutting) afterwards before access is gained to the optical fibers 15.

The invention therefore proposes that the micromodules 10 are pushed away preferably towards - i.e. relocated to - a (half-)section of the central core 20 before performing the cutting-out of an access window in the periphery of jacket 30 giving access to the opposite (half-)section of the central core 20. Figure 1b shows a cross-section of a cable 1 according to the present invention wherein the micromodules 10 are relocated to a section of the central core 20 opposite the cut-out area 200. The micromodules 10 are thus moved away from that (half-)section of the central core 20 on the circumference of which is defined the cut-out area 200 and the risk of damaging a micromodule 10 is thereby considerably reduced. For this purpose, the filling rate of the central core 20 of the cable 1 should be less than 100%, for example between 20% and 90%.

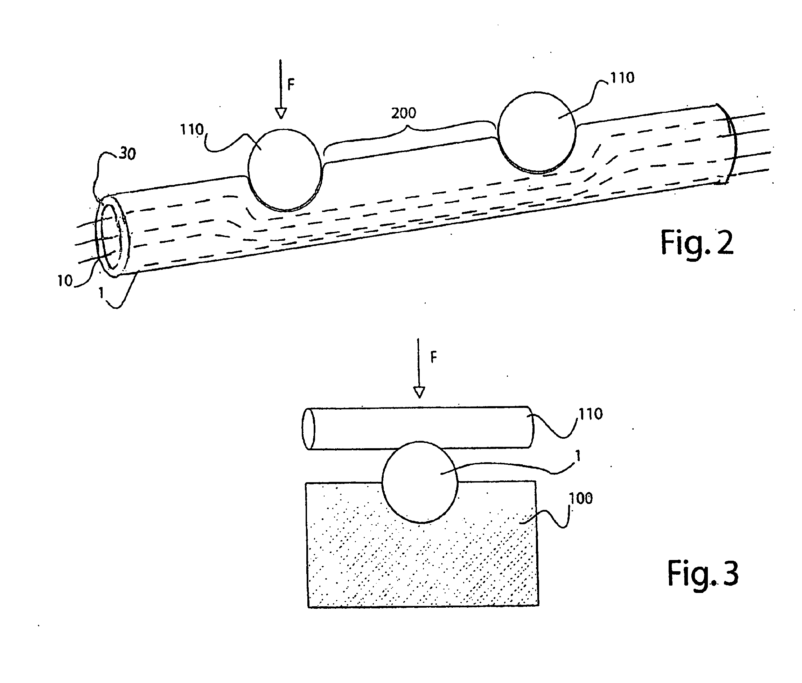

According to a first embodiment, illustrated in Figs. 2 and 3, a radial force F is applied on two distant points of the cable 1 which two points define the cut-out area 200 where the cutting-cut should be performed. In other words, the cut-out area 200 is defined by the distance between the two points.

Fig. 2 shows the cable 1 with the freely positioned micromodules 10 (shown as broken lines). A cut-out area 200 corresponds to a portion of cable 1 which should be opened in order to allow one or more micromodules 10 to be by-passed. The cut-out area 200 may have been identified beforehand on the jacket 30 of the cable 1 by any suitable means, for example by means of notches, color marking or printing of characters. The cut-out area 200 may extend over a length of from about 10 cm to about 20 cm along the cable 1 and generally covers a half-section of the jacket 30 (in a radial manner) in between the strength members 50 on the periphery of the jacket 30. The strength members 60 are generally spared - left untouched- during the cutting-cut of the access windows so as not to be detrimental to the continuity of the mechanical integrity of the cable 1.

According to this first embodiment of the invention, the micromodules 10 positioned in the cable 1, are pushed away towards a half-section of the central core 20, being the half-section opposite to the cut-out area 200. The micromodules 10 are pushed away by applying a radial force F on two points of the outer periphery of the jacket 30 of the cable 1, These two points of application of radial forces F lie on either side of the cut-out area 200. The radial forces F may be exerted by two metal rods 110 which are transversely pressing on the jacket 30 of the cable 1 in two distant points. A jig 100 made in the shape of the cable 1 may be placed under the cable 1 during the process which jig 100 is located on the opposite side of the cable 1 with respect to the rods 110 in order to avoid bending or out-of-roundness of the cable 1 under the effect of the radial forces F. Each radial force F then causes a localized deformation of the jacket 30 of the cable 1 which localized deformation penetrates towards the inside of the longitudinal central core 20 of the cable 1 and pushes away the micromodules 10 towards one side of the hollow space inside the central core 20. Once the micromodules 10 have thereby been pushed away, an access window may be opened on the cut-out area 200 using a cutting tool, with a considerably reduced risk of damaging the micromodules 10 with the cutting tool.

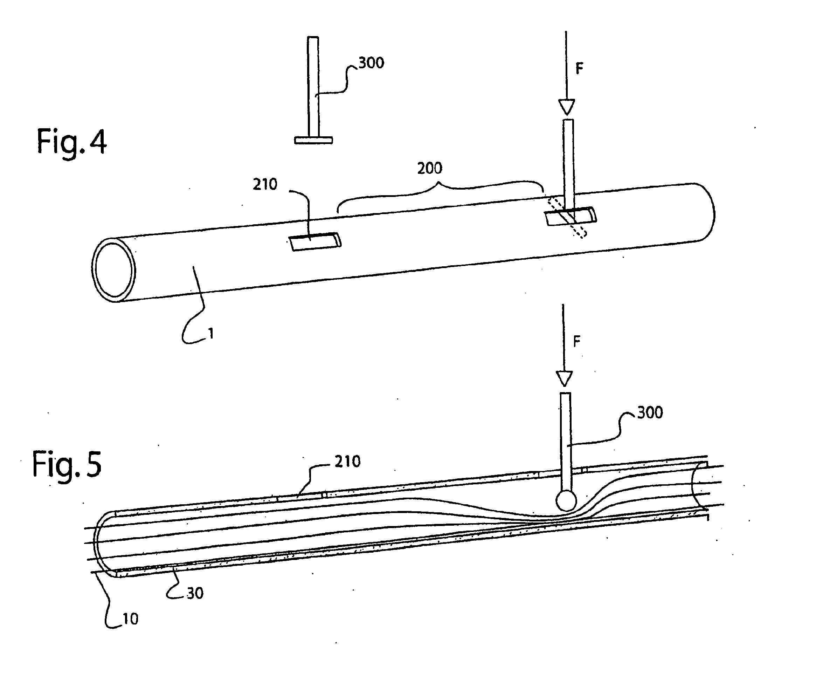

According to a second embodiment, illustrated in Figs. 4 and 5, a radial force F is directly applied on the micromodules 10 at two points of the cable 1 on either side of the area 200 where the cutting out should be performed.

According to this embodiment, two small insertion windows 210 are made manually in longitudinal direction in the jacket 30 of the cable 1. The insertion windows 210 may be made with a mechanical milling cutter or by making a flat opening on the cable 1 with a rasp. These insertion windows 210, which will be used for inserting a pushing tool 300 suitable for pushing away the micromodules 10 towards a half-section of the cable 1, are made in the jacket 30 and through the metal sheath 60, if present, of the cable 1, As the protective envelope 40, if present, is deformable, it will be pushed away - and will not be cut - by the pushing tool 300 at the same time as the micromodules 10 are pushed away. In any case, these insertion windows 210 remain small as compared with an access window. The insertion windows 210 are of the order of 4-5 mm (longitudinal direction) by 1-2 mm (transverse direction). Since these insertion windows 210 are small, they may be made with a limited penetration force so as to avoid that the cutting tool comes into contact with and possibly damages the micromodules 10 or the optical fibers 15. These insertion windows 210 are therefore made without risk of damaging the micromodules 10 or optical fibers 15, The cut-out area 200 corresponds to the portion of the cable 1 that is located between both insertion windows 210 and which cut-out area 200 will extend radially over approximately a half-section of the jacket 30 in between the strength members 50.

The insertion windows 210 are each intended to allow the passage of a pushing tool 300 which should penetrate into the central core 20 of the cable 1 in order to exert a radial force F on the micromodules 10 to push the micromodules 10 away towards a half-sectlon of the cable 1 opposite to the cut-out area 200 of an access window. According to the embodiment illustrated in Fig. 4, the pushing tool 300 has the shape of a T. However it is clear, upon reading the following description, that any other suitable shape of the pushing tool 300 may be contemplated within the scope of the present invention.

Fig. 5 shows the cable 1, with the freely positioned micromodules 10. The micromodules 10 are pushed away towards the half-section of the cable 1 that is opposite to the cut-out area 200 by inserting the pushing tool 300 through the insertion windows 210. For example, the T-shaped pushing tool 300 of Fig. 4 may be introduced into the central core 20 of the cable 1 by sliding the bar facing the cable 1 of the T-shaped pushing tool 300 through the longitudinal slot of an insertion window 210 in such a manner that said bar is parallel to the longitudinal slot. Then the field technician or the robot who carries out the present method performs a quarter turn with the bar of the T-shaped pushing tool 300 which pushing tool 300 may then push away the micromodules 10 as illustrated in Fig. 5. Once the micromodules 10 have thereby been pushed away, an access window may be opened on the cut-out area 200between the two insertion windows 210 using a cutting tool with a considerably reduced risk of damaging the micromodules 10 with the cutting tool.

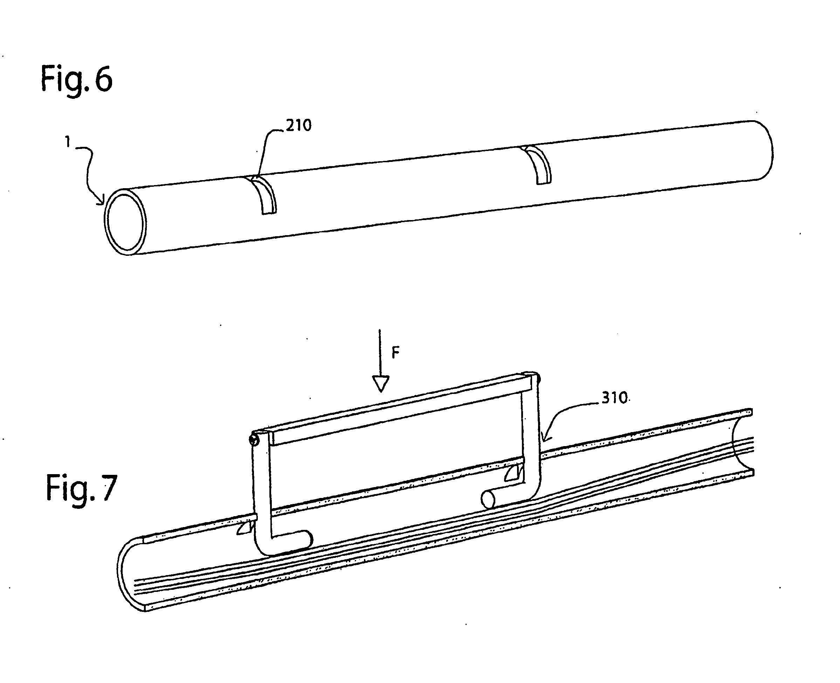

According to a third embodiment, illustrated in Figs. 6 and 7, the insertion windows 210 are transversely made in the jacket 30 of the cable 1 - instead of longitudinally as depicted in Fig. 4. These insertion windows 210 may be made using a mechanical milling cutter or using a rasp. The shape of the insertion windows 210 can be selected according to the shape of the pushing tool 310 to be inserted into the central core 20 of the cable 1, which pushing tool 310 is used to push away the micromodules 10. In any case, these insertion windows 210 remain small as compared with an access window. The insertion windows 210 are of the order of 4-5 mm (transverse direction) by 1-2 mm (longitudinal direction). According to this third embodiment, the pushing tool 310 is a system of legs connected with each other and which are respectively slid through the insertion windows 210 made in the jacket of the cable. These legs are suitable for exerting a radial force F directly on the micromodules 10 in two points of the cable 1 surrounding the cut-out area 200. For example, the legs of the pushing tool 310 may have an L shape. A radial force F may be applied on a bar connecting the legs together; a component of this radial force F is thus transmitted to each leg of the pushing tool 310 in order to push away the micromodules 10 away from the cut-out area 200. Once the micromodules 10 have thereby been pushed away, an access window may be opened on the cut-out area 200 between both insertion windows 210 using a cutting tool with a considerably reduced risk of damaging the micromodules 10 with the cutting tool.

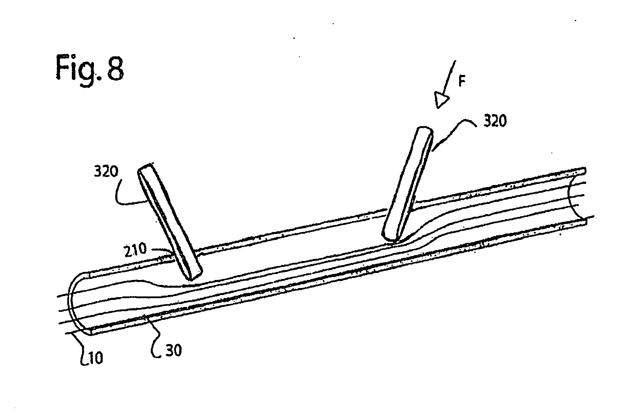

According to a fourth embodiment, illustrated in Fig. 8, the pushing tool 320 is a wedge slid through each of the insertion windows 210 made in the jacket 30 of the cable 1. The wedge tool 320 may for example be a flat rectangular tool with rounded ends, for example of wood. An example of the dimensions are: length of 60 - 100 mm, preferably 80 mm, width 4-8 mm, preferably 6 mm, and thickness 0.5 - 3 mm, preferably 1 mm. The wedges 320 may be introduced inclined through the insertion windows 210 in order to further push away the micromodules 10 radially towards the half-section of the central core 20 that is opposite the helf-section of the central core 20 on which periphery the cut-out area 200 is located and longitudinally into a portion of the central core 20 that is located in the center of the cut-out area 200. In any case, the force F exerted on the micromodules 10 by the wedges 320 comprises a radial component which moves the micromodules 10 away from the cut-out area 200. Once the micromodules 10 have thereby been pushed away, an access window may be opened on the cut-out area 200 between both insertion windows 210 using a cutting tool with a considerably reduced risk of damaging the micromodules 10 with the cutting tool.

Fig. 9 illustrates a method for cutting out an insertion window 210 on the jacket 30 of the cable 1 according to the present invention. According to this embodiment, opening an insertion window 210 in the jacket 30 of the cable 1 may be achieved with a suitable mechanical milling cutter 330 while pushing away the micromodules 10, comprising optical fibers 15, during the cutting-out. The miller cutter 330 also cuts out the large access window.

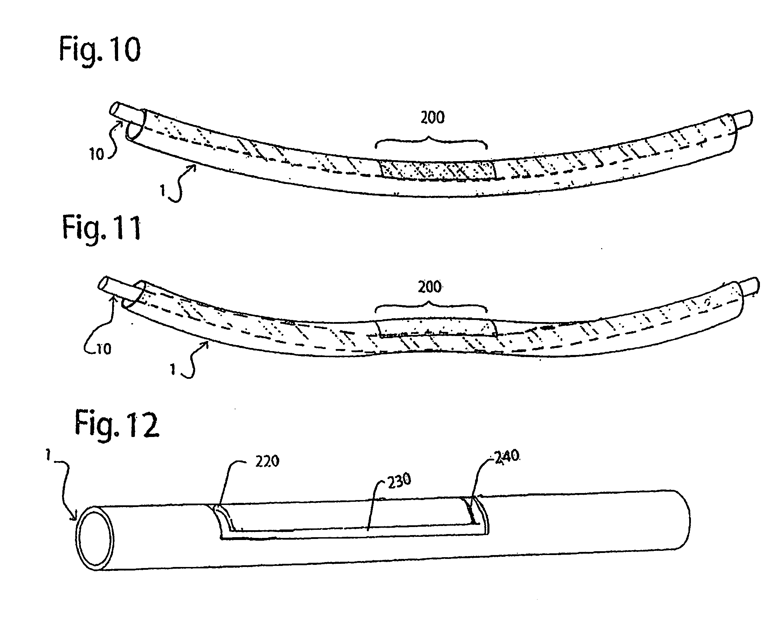

In order to effect this the miller cutter 330 is first inserted through the jacket 30 and optionally metal sheath 60 without damaging the protective envelope 40 which is pushed away (see Figure 9). In this manner insertion window 210 is made. Following the miller cutter 330 is put into operation again while it is moved transversely over the cable 1 thereby milling out material of jacket 30 and making a first transverse opening 220 around approx. 1/3 to 1/2 of the periphery of the cable 1 (see Fig. 12). Next the miller cutter 330, while in operation, is moved longitudinally over the cable 1 milling out material of jacket 30 in order to make a longitudinal opening 230. After that a second transverse opening 240 is made parallel to the first opening 220. This allows the jacket 30 to be folded open to gain access to the content of the cable 1, being the micromodules 10 or fibers 15 covered by protective envelope 40. It is of course also possible to make a fourth longitudinal opening (not shown) to complete the access window by removing the piece of the jacket 30 that has been cut out.

A mechanical milling cutter 330 (e.g. a Dremel ®) for example with a conical profile as illustrated in Fig. 9 or with a rectangular profile, is calibrated so that its penetration depth in the cable 1 is sufficient for piercing the jacket 30 as well as the metal sheath 60 and which is calibrated to go past the metal sheath 60 by only about 1 mm. The mining cutter 330 may be driven by a small electric motor, in particular if it has to pierce metal sheath 60, for example in stainless steel.

The micromodules 10 are enveloped by a protective envelope 40 which is flexible and thin (about 35 - 75 µm). The milling cutter 330 will push away the micromodules 10 by pressing on the protective envelope 40 without piercing it. The micromodules 10 are thus moved away from the cut-out area 200 of the access window by the deformation of the protective envelope 40 which moves towards the inside of the central core 20 under the action of the milling cutter 330 without the protective envelope 40 being damaged; the micromodules 10 thereby remain well protected. According to this embodiment, a same pushing and cutting tool - the mechanical milling cutter 330 - exerts a radial force F on the micromodules 10 and performs the cutting-out of the jacket 30 of the cable 1 in proximity to the exertion point of the radial force, being the point on the cable where the force F is exerted.

Before cutting out an access window while pushing away the micromodules 10, e.g. by deformation of the protective envelope 40, the cable 1 may be positioned (bent) beforehand in such a manner so that the cut-out area 200 is located on a convex area of the cable 1. This deformation is illustrated in Figs. 10 and 11. Indeed, in the case when the central core 20 is tensioned in the cable 1, as a result of installation or manufacturing stresses for example, the micromodules 10 will adopt the shortest path n the case of bending of the cable 1 since the filling rate is less than 100%, meaning that there is sufficient space inside the central core 20 for the micromodules 10 to adopt the shortest path. In such a situation, if the access window should be made on a concave portion of the cable (Fig. 10), the milling cutter 330 may after all damage the protective envelope 40 and the micromodules 10 which are strongly pressed against the jacket 30 of the cable 1 in the concave portion. It is then possible to slightly twist the cable (Fig. 11) so that the cut-out area 200 is on a convex portion of the cable 1, the micromodules 10 being then naturally pressed in the opposite concave portion.

Of course, the present invention is not limited to the embodiments described as examples. In particular, a single exertion point of a force with a radial component may be provided in order to move the micromodules 10 or optical fibers 15 away from the cut-out area 200, the exertion point of the radial force exerted on the micromodules 10 or optical fibers 15 being then in longitudinal direction substantially in the middle of - i.e. centrally - relatively to the cut-out area 200; also, three or more exertion points of a force with a radial component may be provided for pushing away the micromodules 10 or optical fibers 15. Further, the shapes and the dimensions of the pushing tools 300, 310, 320 suitable for pushing away the micromodules 10 or optical fibers 15 may vary relatively to the illustrated examples, and the embodiments described above may be combined with each other.

## Claims

1. A method for accessing one or more optical fibers (15) of a telecommunication cable (1), the cable (1) comprising a plurality of optical fibers (15) freely positioned In a central core (20) of the cable (1), which central core (20) is surrounded by a jacket (30), the method comprising the steps of:
- defining at least one cut-out area (200) on the outer periphery of the jacket (30) of the cable (1) in which at least one cut-out area (200) an access window is to be cut out;
- pushing away with a pushing tool (300, 310, 320) at least some of the optical fibers (15) to a section of the central core (20) opposite to the at least one cut-out area (200) by exerting a force (F) on said at least some of the optical fibers (15) in at least two distant points of the cable (1) said force (F) having at least one radial component with respect to the cable (1);
- performing a cut-out in the jacket (30) of the cable (1) in said at least one cut-out area (200) between said two points while maintaining said force (F) on the optical fibers (15) in order to form said access window.

2. The method according to claim 1, wherein the force (F) exerted on the optical fibers (15) is effected by exerting a force (F) on the outer periphery of the jacket (30).

3. The method according to claim 1, wherein at least one insertion window (210) is made in the jacket (30) in the cut-out area (200), and following said force (F) exerted on the optical fibers (15) is exerted through said at least one insertion window (210).

4. The method according to claim 3, wherein said at least one insertion window (210) is suitable for receiving the pushing tool (300, 310, 320) used for exerting said force (F) on the optical fibers (15).

5. The method according to claim 3 - 4, wherein said insertion window (210) has a surface area between 4 and 90 mm².

6. The method according to any of claims 2 - 5, wherein said force (F) is exerted on at least two longitudinally distant points on the jacket (30), located on said cut-out area (200).

7. The method according to any of claims 1 - 8, wherein the central core (20) is surrounded by a protective envelope (40) which is located on the inside of the jacket (30), between which protective envelope (40) and the jacket (30) optionally a metal sheath (60) is present.

8. The method according to claim 7, wherein the step of pushing away the optical fibers (15) and the step of performing a cut-out in the jacket (30) are carried out simultaneously by a pushing and cutting tool (330) suitable for piercing the jacket (30) and optionally the metal sheath (60) and for deforming the protective envelope (40) in order to exert a force (F) on the optical fibers (15).

9. The method according to claim 8, wherein the pushing and cutting tool (330) is a mechanical milling cutter calibrated so as to penetrate into the cable (1) beyond the jacket (30) and optionally the metal sheath (60).

10. The method according to any of claims 1 - 9, wherein said plurality of optical fibers (15) are grouped in at least one micromodule (10).

11. The method according to any of claims 1 -10, wherein said plurality of optical fibers (15) occupy the central core (20) with a filling rate between 20% and 90%.

## Patentansprüche

1. Verfahren zum Zugreifen auf eine oder mehrere optische Fasern (15) eines Telekommunikationskabels (1), wobei das Kabel (1) mehrere optische Fasern (15) umfasst, welche frei in einem mittleren Innenteil (20) des Kabels (1) angeordnet sind, wobei das mittlere Innenteil (20) von einem Mantel (30) umgeben ist, wobei das Verfahren die Schritte umfasst:
- Definieren von mindestens einem Ausschnittbereich (200) auf dem Außenumfang des Mantels (30) des Kabels (1), wobei in dem mindestens einen Ausschnittbereich (200) ein Zugriffsfenster auszuschneiden ist;
- Wegdrücken von mindestens einigen der optischen Fasern (15) in einen Abschnitt des mittleren Innenteils (20) gegenüber dem mindestens einen Ausschnittbereich (200) mit einem Schiebewerkzeug (300, 310, 320) durch Ausüben einer Kraft (F) auf die mindestens einigen der optischen Fasern (15) an mindestens zwei entfernten Punkten des Kabels (1), wobei die Kraft (F) mindestens eine radiale Komponente bezogen auf das Kabel (1) aufweist;
- Ausführen eines Ausschnitts in dem Mantel (30) des Kabels (1) in dem mindestens einen Ausschnittbereich (200) zwischen den zwei Punkten, während die Kraft (F) auf die optischen Fasern (15) beibehalten wird, um das Zugriffsfenster auszubilden.

2. Verfahren nach Anspruch 1, wobei die Kraft (F), welche auf die optischen Fasern (15) ausgeübt wird, durch Ausüben einer Kraft (F) auf den Außenumfang des Mantels (30) bewirkt wird.

3. Verfahren nach Anspruch 1, wobei mindestens ein Einführungsfenster (210) in dem Mantel (30) in dem Ausschnittbereich (200) angefertigt wird, und anschließend die Kraft (F), welche auf die optischen Fasern (15) ausgeübt wird, durch das mindestens eine Einführungsfenster (210) ausgeübt wird.

4. Verfahren nach Anspruch 3, wobei das mindestens eine Einführungsfenster (210) für ein Aufnehmen des Schiebewerkzeugs (300, 310, 320) geeignet ist, welches zum Ausüben der Kraft (F) auf die optischen Fasern (15) verwendet wird.

5. Verfahren nach Anspruch 3 bis 4, wobei das Einführungsfenster (210) einen Flächenbereich zwischen 4 und 10mm² aufweist.

6. Verfahren nach einem der Ansprüche 2 bis 5, wobei die Kraft (F) auf mindestens zwei in Längsrichtung entfernten Punkten auf den Mantel (30) ausgeübt wird, welche an dem Ausschnittbereich (200) angeordnet sind.

7. Verfahren nach einem der Ansprüche 1 bis 6, wobei das mittlere Innenteil (20) mit einer Schutzumhüllung (40) umgeben ist, welche an der Innenseite des Mantels (30) angeordnet ist, wobei zwischen der Schutzumhüllung (40) und dem Mantel (30) optional eine Metallabschirmung (60) vorhanden ist.

8. Verfahren nach Anspruch 7, wobei der Schritt des Wegschiebens der optischen Fasern (15) und der Schritt des Ausführens eines Ausschnitts in dem Mantel (30) gleichzeitig durch ein Schiebe- und Schneidwerkzeug (330) ausgeführt werden, welches zum Durchdringen des Mantels (30) und optional der Metallabschirmung (60) und zum Verformen der Schutzumhüllung (40) geeignet ist, um eine Kraft (F) auf die optischen Fasern (15) auszuüben.

9. Verfahren nach Anspruch 8, wobei das Schiebe- und Schneidwerkzeug (330) ein mechanisches Fräswerkzeug ist, welches darauf kalibriert ist, in das Kabel (1) über den Mantel (30) und optional die Metallabschirmung (60) hinaus einzudringen.

10. Verfahren nach einem der Ansprüche 1 bis 9, wobei die mehreren optischen Fasern (15) in mindestens einem Mikromodul (10) gruppiert sind.

11. Verfahren nach einem der Ansprüche 1 bis 10, wobei die mehreren optischen Fasern (15) den mittleren Innenteil (20) mit einer Füllrate zwischen 20% und 90% belegen.

## Revendications

1. Procédé d'accès à une ou plusieurs fibres optiques (15) d'un câble de télécommunication (1), le câble (1) comprenant une pluralité de fibres optiques (15) disposées librement dans un coeur central (20) du câble (1), lequel coeur central (20) est entouré d'un gainage (30), le procédé comprenant les étapes consistant à :
- définir au moins une zone découpée (200) sur la périphérie extérieure du gainage (30) du câble (1), au moins une zone découpée (200) dans laquelle une fenêtre d'accès doit être découpée ;
- repousser à l'aide d'un outil à repousser (300, 310, 320) au moins certaines des fibres optiques (15) jusqu'à une section du coeur central (20) opposée à l'au moins une zone découpée (200) en exerçant une force (F) sur lesdites au moins certaines des fibres optiques (15) en au moins deux points distants du câble (1), ladite force (F) ayant au moins une composante radiale par rapport au câble (1) ;
- pratiquer une découpe dans le gainage (30) du câble (1) dans ladite au moins une zone découpée (200) entre lesdits deux points tout en maintenant ladite force (F) sur les fibres optiques (15) afin de former ladite fenêtre d'accès.

2. Procédé selon la revendication 1, dans lequel la force (F) exercée sur les fibres optiques (15) est produite en exerçant une force (F) sur la périphérie extérieure du gainage (30).

3. Procédé selon la revendication 1, dans lequel au moins une fenêtre d'insertion (210) est pratiquée dans le gainage (30) dans la zone découpée (200), et après que ladite force (F) exercée sur les fibres optiques (15) a été exercée à travers ladite au moins une fenêtre d'insertion (210).

4. Procédé selon la revendication 3, dans lequel ladite au moins une fenêtre d'insertion (210) est apte à recevoir l'outil à repousser (300, 310, 320) utilisé pour exercer ladite force (F) sur les fibres optiques (15).

5. Procédé selon les revendications 3 à 4, dans lequel ladite fenêtre d'insertion (210) a une superficie comprise entre 4 et 10 mm².

6. Procédé selon l'une quelconque des revendications 2 à 5, dans lequel ladite force (F) est exercée sur au moins deux points longitudinalement distants sur le gainage (30), situés sur ladite zone découpée (200).

7. Procédé selon l'une quelconque des revendications 1 à 6, dans lequel le coeur central (20) est entouré d'une enveloppe protectrice (40) qui est située sur la face intérieure du gainage (30), enveloppe protectrice (40) et gainage (30) entre lesquels est facultativement présente une gaine métallique (60).

8. Procédé selon la revendication 7, dans lequel l'étape consistant à repousser les fibres optiques (15) et l'étape consistant à pratiquer une découpe dans le gainage (30) sont effectuées simultanément au moyen d'un outil à repousser et de découpe (330) apte à percer le gainage (30) et facultativement, la gaine métallique (60) et à déformer l'enveloppe protectrice (40) afin d'exercer une force (F) sur les fibres optiques (15).

9. Procédé selon la revendication 8, dans lequel l'outil à repousser et de découpe (330) est une fraise mécanique étalonnée de façon à pénétrer à l'intérieur du câble (1) au-delà du gainage (30) et facultativement, de la gaine métallique (60).

10. Procédé selon l'une quelconque des revendications 1 à 9, dans lequel ladite pluralité de fibres optiques (15) sont regroupées en au moins un micromodule (10).

11. Procédé selon l'une quelconque des revendications 1 à 10, dans lequel ladite pluralité de fibres optiques (15) occupent le coeur central (20) avec un taux de remplissage compris entre 20 % et 90 %.
